# EUROPÄISCHE PATENTSCHRIFT

(11) **EP 4 004 392 B1**
(45) Veröffentlichungstag und Bekanntmachung des Hinweises auf die Patenterteilung: **26.04.2023**
(21) Anmeldenummer: 20749819.7
(22) Anmeldetag: 20.07.2020
(51) Int. Cl.: F16D 65/18

(54) **ELEKTROMAGNETISCHE BREMSE**
ELECTROMAGNETIC BRAKE
FREIN ÉLECTROMAGNÉTIQUE

(30) Priorität: 24.07.2019 DE 102019120043
(43) Veröffentlichungstag der Anmeldung: 01.06.2022
(73) Patentinhaber: Konecranes Global Corporation, 05830 Hyvinkää (FI)
(72) Erfinder: SKORSKI, Richard, 37170 Uslar (DE); ENGEL, Harald, 37170 Uslar (DE); KRÖPKE, Thomas, 58300 Wetter (DE)
(74) Vertreter: Moser Götze & Partner Patentanwälte mbB
(86) Internationale Anmeldenummer: PCT/EP2020/070400
(87) Internationale Veröffentlichungsnummer: WO 2021/013777

(56) Entgegenhaltungen:
- DE-A1-102017 000 845
- JP-A- H05 256 330
- KR-B1- 101 299 558

## Beschreibung

Die Erfindung betrifft eine elektromagnetische Bremse gemäß dem Oberbegriff von Anspruch 1. Weiterhin betrifft die Erfindung ein Verfahren zur Montage einer solchen elektromagnetischen Bremse gemäß dem Oberbegriff von Anspruch 8.

Eine derartige elektromagnetische Bremse ist aus KR 101 299 558 B1 bekannt. Bei dieser Bremse umfasst die Ankerscheibe Führungsnasen zur Führung der Ankerscheibe im Deckel der Bremse. Eine Führung der Ankerscheibe relativ zum Gehäusekörper erfolgt über Stifte, die in Bohrungen des Gehäusekörpers bzw. Bohrungen der Ankerscheibe eingreifen.

Weitere elektromagnetische Bremsen sind aus der DE 10 2014 001 474 B4, der DE 100 49 168 C2 oder der DE 28 32 723 C2 bekannt. Die darin jeweils beschriebene elektromagnetische Bremse wird unter Anwendung von kraftschlüssigen Verbindungen montiert und beispielsweise in einem Roboter oder einem Aufzug eingesetzt.

Elektromagnetische Bremsen mit axialer Führung der Ankerscheibe im Gehäusekörper sind bereits aus der DE 10 2012 001 701 B3 und der DE 41 09 786 A1 bekannt. Ein Teil der Führung ist hierbei jeweils von durchgehenden Löchern in der Mantelwand des Gehäusekörpers gebildet. In der DE 10 2017 000 845 A1 wird die Ankerscheibe mittels Stiftschrauben axial im Gehäusekörper geführt.

Eine weitere elektromagnetische Bremse ist aus JP H05 256 330 A bekannt.

Ausgehend von diesem Stand der Technik liegt der vorliegenden Erfindung die Aufgabe zugrunde, eine verbesserte elektromagnetische Bremse zu schaffen, die in besonders einfacher Weise montiert werden kann.

Diese Aufgabe wird durch eine elektromagnetische Bremse mit den Merkmalen des Anspruchs 1 und einem Verfahren gemäß den Merkmalen des Anspruchs 8 gelöst. Vorteilhafte Ausgestaltungen der Erfindung sind in den abhängigen Ansprüchen sowie der nachfolgenden Beschreibung angegeben.

Erfindungsgemäß wird eine verbesserte elektromagnetische Bremse mit einem Gehäusekörper und einer Ankerscheibe, wobei der Gehäusekörper einen Polkern umfasst, dadurch geschaffen, dass die Ankerscheibe über eine Nut-Nase-Verbindung im Gehäusekörper axial geführt ist, wobei mindestens eine Führungsnut, vorzugsweise drei Führungsnuten, und mindestens eine zugehörige Führungsnase, vorzugsweise drei zugehörige Führungsnasen, vorgesehen sind. Zusätzlich zur axialen Führung hat die Führungsnut der Nut-Nase-Verbindung auch die Funktion, die Drehbarkeit der Ankerscheibe in Umfangsrichtung so einzuschränken, dass die Drehbarkeit nur im Rahmen des für die axialen Bewegungen erforderlichen Spiels zugelassen wird.

Der Gehäusekörper weist eine im Wesentlichen hohlzylindrische und ringförmige Form mit einer Öffnung an seiner Stirnseite und einem der Stirnseite gegenüberliegenden Boden auf. Der Gehäusekörper ist vorzugsweise einteilig ausgebildet. Der Werkstoff des Gehäusekörpers ist so gewählt, dass dessen Steifigkeit ausreichend für die bei einer oder mehreren Bremsung(en) auftretenden Kräfte und dessen Temperaturbeständigkeit ausreichend für die bei einer oder mehreren Bremsung(en) auftretenden Temperaturen ist. Zudem ist der Werkstoff des Gehäusekörpers vorzugsweise magnetisch.

Die jeweilige Führungsnut ist vorzugsweise im Gehäusekörper angeordnet und insbesondere in dessen Mantelwand ausgebildet. Die Mantelwand ist im Bereich der Nut-Nase-Verbindung und damit insbesondere im Bereich der Führungsnut nach außen geschlossen, da die Führungsnut kein durchgehendes Loch der Mantelwand, sondern eine Vertiefung in der Mantelwand des Gehäusekörpers darstellt. Ein durchgehendes und von der Führungsnase vollständig durchdringbares Loch ist nach diesem Verständnis also keine Führungsnut. Es ist auch denkbar, dass die Führungsnut, insbesondere in Form einer Ausnehmung, in der Ankerscheibe angeordnet ist und als Führungsnase eine entsprechend korrespondierende nasenförmige Kontur im Gehäusekörper angeordnet ist, wobei diese dann vorzugsweise integraler Bestandteil des Gehäusekörpers und insbesondere in dessen Mantelwand ausgebildet ist. In beiden vorgenannten Fällen ist die Mantelwand im Bereich der Nut-Nase-Verbindung nach außen geschlossen. Dadurch wird ein besserer Schutz gegen Umwelteinflüsse erreicht. Außerdem ragen in vorteilhafter Weise keine bewegten Elemente wie beispielsweise die Führungsnase aus dem Gehäusekörper heraus, so dass ungewollte Kollisionen mit anderen Bauteilen vermieden werden können.

Um eine Führung der axial verschiebbaren Ankerscheibe ohne ein Verkanten im Gehäusekörper zu ermöglichen, sind vorzugsweise drei Führungsnuten und drei zugehörige Führungsnasen vorgesehen. Die Führungsnuten und Führungsnasen sind vorzugsweise gleichmäßig über den Umfang des Gehäusekörpers beziehungsweise der Ankerscheibe verteilt. Die Außenkontur der Führungsnasen ist formähnlich oder vorzugsweise formgleich zu der Innenkontur der Führungsnuten ausgebildet, wobei zwischen der Außenkontur der Führungsnasen und der Innenkontur der Führungsnuten ausreichend Spiel für eine axiale Bewegung der Ankerscheibe vorgesehen ist.

Der Werkstoff der Ankerscheibe ist so gewählt, dass dessen Steifigkeit ausreichend für die bei einer oder mehreren Bremsung(en) auftretenden Kräfte und dessen Temperaturbeständigkeit ausreichend für die bei einer oder mehreren Bremsung(en) auftretenden Temperaturen ist.

Die Ankerscheibe ist vorzugsweise ausschließlich über die vorgenannte Nut-Nase-Verbindung im Gehäusekörper axial geführt. Weitere Führungselemente, wie beispielsweise Führungsbolzen oder Führungshülsen, sind für die Führung der Ankerscheibe im Gehäusekörper nicht erforderlich. Diese können somit entfallen und der Konstruktions- und Herstellungsaufwand folglich reduziert werden. Dies gilt vor allem dann, wenn die Führungselemente beispielsweise mit Schrauben an dem Gehäusekörper kraftschlüssig befestigt würden.

Im Gegensatz zum Stand der Technik kann also bei der erfindungsgemäßen elektromagnetischen Bremse die Montage derart vereinfacht werden, dass die elektromagnetische Bremse einfacher teilautomatisiert oder vollautomatisiert montiert werden kann. Auch gegenüber einer stoffschlüssigen Verbindung ergeben sich diese Vorteile. Hiermit ist eine einfache Montage in einem Fertigungsbetrieb, der im Sinne von Industrie 4.0 ausgelegt ist, insbesondere mithilfe von Robotern möglich.

Außer dem Gehäusekörper und der Ankerscheibe umfasst die elektromagnetische Bremse vorzugsweise eine Spuleneinheit, einen von der Spuleneinheit erregbaren Polkern, der innerhalb der Spuleneinheit angeordnet ist, mindestens eine Druckfeder, eine Bremsscheibe und eine Reibscheibe. Die Spuleneinheit, der Polkern, die Druckfeder(n), die Bremsscheibe und die Reibscheibe sind wie die Ankerscheibe vorzugsweise in dem Gehäusekörper angeordnet. Vorzugsweise werden die Spuleneinheit, die Ankerscheibe, die Bremsscheibe und die Reibscheibe oder zumindest einzelne hiervon im Rahmen der Montage über die Öffnung an der Stirnseite in den Gehäusekörper eingebracht und hiermit verbunden. Dies gilt vorzugsweise auch für die Druckfeder(n). Der Polkern kann Bestandteil des Gehäusekörpers sein.

Die Werkstoffe des Polkerns, der Reibscheibe und der Bremsscheibe sind so gewählt, dass deren Steifigkeit ausreichend für die bei einer oder mehreren Bremsung(en) auftretenden Kräfte und deren Temperaturbeständigkeit ausreichend für die bei einer oder mehreren Bremsung(en) auftretenden Temperaturen ist. Der Polkern ist zudem aus einem magnetischen Werkstoff gefertigt, damit er durch die Spuleneinheit erregbar ist.

Die Bremsscheibe ist vorzugsweise zwischen der axial verschiebbaren Ankerscheibe und der Reibscheibe angeordnet und rotierbar sowie axial verschiebbar eingerichtet. Die mindestens eine Druckfeder ist so angeordnet und eingerichtet, dass durch deren Druckkraft die Ankerscheibe zur Bremsscheibe hin axial verschiebbar ist. Die Spuleneinheit und der Polkern sind hingegen so angeordnet und eingerichtet, dass durch den mittels der Spuleneinheit elektromagnetisch erregten Polkern eine Zugkraft erzeugbar ist, durch welche die Ankerscheibe von der Bremsscheibe weg axial verschiebbar ist.

Die Bremsscheibe kann mit einer Welle, insbesondere einer Antriebswelle, insbesondere einer Ausgangswelle eines Motors, verbunden sein. Hierbei kann es erforderlich sein, dass der Gehäusekörper, die Spuleneinheit, der Polkern, die Druckfeder, die Ankerscheibe und die Reibscheibe oder zumindest einzelne hiervon ringförmig ausgebildet sind, indem sie jeweils ein Loch oder eine Öffnung aufweisen, damit die Welle dort hindurch geführt werden kann.

In einem ersten Betriebszustand der elektromagnetischen Bremse, dem Bremsen, drückt die Ankerscheibe mittels der Druckkraft der mindestens einen Druckfeder die Bremsscheibe an die Reibscheibe, um durch das zwischen der Bremsscheibe und der Reibscheibe und/oder zwischen der Bremsscheibe und der Ankerscheibe entstehende Bremsmoment die Bremsscheibe zu bremsen. Die Reibscheibe und/oder die Ankerscheibe weist/weisen vorzugsweise an ihrer jeweils zur Bremsscheibe gerichteten Seite eine geeignet strukturierte Oberfläche auf, um beim Bremsen eine optimale Verzögerung der Bremsscheibe sicherzustellen.

In einem zweiten Betriebszustand der elektromagnetischen Bremse, dem Lüften, ist die Ankerscheibe mittels einer von der Spuleneinheit und dem Polkern erzeugten Zugkraft, welche größer als die Druckkraft der mindestens einen Druckfeder ist, von der Bremsscheibe so beabstandet angeordnet, dass eine freie und somit ungebremste Rotation der Bremsscheibe ermöglicht wird.

In einer vorteilhaften Ausgestaltung ist vorgesehen, dass die Reibscheibe formschlüssig, vorzugsweise bajonettartig, mit dem Gehäusekörper verbunden ist und/oder gegenüber dem Gehäusekörper gegen ein Verdrehen gesichert ist, wobei eine solche bajonettartige Verbindung auch als Bajonettverschluss bezeichnet wird.

Mit anderen Worten sind an dem Gehäusekörper und an der Reibscheibe jeweils miteinander korrespondierende Geometrien vorgesehen, welche derart ausgebildet und eingerichtet sind, dass mittels dieser der Gehäusekörper und die Reibscheibe formschlüssig verbindbar sind. Eine solche formschlüssige und insbesondere bajonettartige Verbindung kann insbesondere dadurch entstehen, dass der Gehäusekörper und die Reibscheibe zunächst ineinander gesteckt, gesetzt, gelegt, gestellt oder geschoben und damit miteinander in Eingriff gebracht werden.

Bevorzugte Ausgestaltungen der auch als Bajonettverschluss bezeichneten bajonettartigen Verbindung, die eine bevorzugte Sonderform der formschlüssigen Verbindung ist, werden im Folgenden ausführlich beschrieben.

Die Reibscheibe ist als im Wesentlichen kreisförmige und vorzugsweise ringförmige Scheibe ausgebildet und weist auf ihrem Umfang mindestens eine nach außen gerichtete Nase auf, mittels derer die Reibscheibe formschlüssig und bajonettartig im Gehäusekörper gelagert wird. Um ein Abheben der Reibscheibe aus dem Gehäusekörper vermeiden zu können, sind mindestens zwei Nasen erforderlich.

Vorzugsweise umfasst die Reibscheibe drei Nasen, die jeweils in einem Winkel von 120° auf dem Umfang der Reibscheibe angeordnet sind. Die Reibscheibe ist also vorzugsweise drehsymmetrisch ausgebildet, sodass die Nasen gleichmäßig auf dem Umfang der Reibscheibe verteilt sind. Eine andere Anzahl von Nasen ist selbstverständlich auch denkbar.

Der Gehäusekörper weist im Bereich der Stirnseite mindestens eine Aussparung mit einer sich daran anschließenden Aufnahmenut auf. Die Aussparung ist also an einem von der Mantelwand des Gehäusekörpers gebildeten und die Aufnahmenut begrenzenden Steg an der Stirnseite des Gehäusekörpers angeordnet. Der Gehäusekörper hat für jede Nase der Reibscheibe eine solche Aussparung mit sich daran jeweils anschließender Aufnahmenut, also vorzugsweise drei. Eine andere Anzahl von Aussparungen mit sich daran jeweils anschließenden Aufnahmenuten ist selbstverständlich auch denkbar. Die Aussparungen sind dabei jeweils an zu den Nasen korrespondierenden Positionen in dem Gehäusekörper eingebracht. Die Aussparungen ermöglichen ein Einsetzen der Reibscheibe beziehungsweise ihrer Nasen in die Aufnahmenuten und damit einhergehend das Herstellen der formschlüssigen Verbindung zwischen Gehäusekörper und Reibscheibe. Die Aufnahmenuten erstrecken sich vorzugsweise abschnittsweise umlaufend und voneinander beabstandet in der Mantelwand des Gehäusekörpers. Eine solche abschnittsweise Anordnung der Aufnahmenuten hat den Vorteil, dass die endmontierte Position der Reibscheibe im Gehäusekörper in einfacher Weise durch das von der Aussparung abgewandte und insbesondere geschlossene Ende der Aufnahmenut vorbestimmt werden kann und damit nachfolgende Montageschritte vereinfacht werden können. Durch ihre geschlossenen Enden definieren die Aufnahmenuten somit jeweils einen Bajonettsitz, was bei der Montage das Finden der endmontierten Position erleichtert. Anstelle mehrerer getrennter Aufnahmenuten für die Nasen der Reibscheibe kann alternativ auch eine einzige über den gesamten Umfang umlaufende Aufnahmenut vorgesehen sein.

Für die Herstellung der bajonettartigen Verbindung werden also zunächst die Nasen der Reibscheibe durch die Aussparungen des Gehäusekörpers geführt. Die Kontur der Nasen der Reibscheibe und die Kontur der Aussparungen im Gehäusekörper sind derart aufeinander abgestimmt, dass die Nasen in Einbaulage durch die Aussparungen hindurch passen und dabei genügend Spiel vorhanden ist. In einem zweiten Schritt werden die Nasen der Reibscheibe von der Aussparung in die Aufnahmenuten des Gehäusekörpers geführt und hierzu in Rotationsrichtung verschoben. Die Reibscheibe und der Gehäusekörper werden hierbei in für einen Bajonettverschluss typischer Weise relativ zueinander verdreht. Die Materialstärke der Nasen und die Breite der Aufnahmenuten sind derart aufeinander abgestimmt, dass die Nasen mit ausreichend Spiel innerhalb der Aufnahmenut in Rotationsrichtung bewegt werden können.

Weitere Elemente sind für die Herstellung der Verbindung zwischen der Reibscheibe und dem Gehäusekörper nicht erforderlich. Im Gegensatz zum Stand der Technik, bei dem die Verbindung zwischen Reibscheibe und Gehäusekörper beziehungsweise zwischen Reibscheibe und anderen Elementen der elektromagnetischen Bremse kraftschlüssig, insbesondere mittels Schrauben, erfolgt, kann also die Montage derart vereinfacht werden, dass die elektromagnetische Bremse einfacher teilautomatisiert oder vollautomatisiert montiert werden kann. Auch gegenüber einer stoffschlüssigen Verbindung ergeben sich diese Vorteile.

Die Reibscheibe wird während des Bremsens mittels der durch die mindestens eine Druckfeder erzeugten Druckkraft über die Ankerscheibe und die Bremsscheibe an den äußeren Steg der die Aufnahmenut begrenzenden Mantelwand des Gehäusekörpers gedrückt. Die Reibscheibe wird während des Lüftens mittels des von der Spuleneinheit und dem Polkern erzeugten Magnetfelds beziehungsweise der hieraus resultierenden Zugkraft an den inneren Steg der Aufnahmenut gezogen. Trotz einer, bei der Montage der elektromagnetischen Bremse erzeugten, rein formschlüssigen Verbindung zwischen Gehäusekörper und Reibscheibe, wird die Reibscheibe also während des Betriebes durch die dabei wirkenden Kräfte an einen der die Aufnahmenut des Gehäusekörpers begrenzenden Stege gezogen oder gedrückt. Somit können Vibrationen an der Reibscheibe und damit eine Geräuschentwicklung während des Betriebes der elektromagnetischen Bremse reduziert oder sogar vermieden werden.

Die Reibscheibe ist, insbesondere während des Betriebs der elektromagnetischen Bremse, gegenüber dem Gehäusekörper gegen ein Verdrehen gesichert. Hierdurch wird verhindert, dass die Reibscheibe sich nach Herstellung der formschlüssigen und insbesondere bajonettartigen Verbindung so verdrehen kann, dass ein Lösen der Verbindung zwischen der Reibscheibe und dem Gehäusekörper droht. Insbesondere nach ihrer Positionierung in der Aufnahmenut kann sich die Reibscheibe somit nicht mehr aus der Aufnahmenut heraus in Richtung der angrenzenden Aussparungen verdrehen, was bei Deckungsgleichheit der Nasen und Aussparungen ein Lösen der Verbindung zwischen der Reibscheibe und dem Gehäusekörper zur Folge haben könnte. Vorzugsweise ist für eine solche Verdrehsicherung eine entsprechend ausgebildete Kontur in der Reibscheibe, vorzugsweise in zumindest einer ihrer Nasen, vorgesehen, mit der dann ein Sicherungselement in Eingriff gebracht wird. Die Verdrehsicherung kann also durch Formschluss zwischen der Reibscheibe und dem Sicherungselement hergestellt werden.

Vorteilhafterweise ist die Reibscheibe mittels mindestens eines Sicherungselements gegenüber dem Gehäusekörper gegen ein Verdrehen gesichert und das Sicherungselement ist vorzugsweise ein Verbindungselement, welches für den Anbau der elektromagnetischen Bremse an einem Bauteil, beispielsweise zum Anflanschen an einem Motor oder einer Seiltrommel, verwendet wird. Das Sicherungselement kann beispielsweise ein Stift oder eine Schraube sein, welches dann in die Kontur in der Reibscheibe eingreift und dadurch die formschlüssige Verdrehsicherung bildet.

Das Sicherungselement wird vorzugsweise durch eine Bohrung im Gehäusekörper und eine die Kontur bildende Ausnehmung in einer der Nasen der Reibscheibe geführt. Weder die Bohrung im Gehäusekörper noch die Ausnehmung in der Nase der Reibscheibe weisen ein Gewinde auf, sodass zwischen dem Sicherungselement und der Reibscheibe und zwischen dem Sicherungselement und dem Gehäusekörper auch bei Verwendung einer Schraube eine rein formschlüssige Verbindung entsteht.

Je nach der vorgesehenen Betriebsbelastung der elektromagnetischen Bremse kann es erforderlich sein, dass mehrere Sicherungselemente verwendet werden. Für jedes Sicherungselement ist hierbei vorzugsweise eine entsprechende Nase mit einer Ausnehmung an der Reibscheibe vorgesehen. Ist die Anzahl der Sicherungselemente allerdings kleiner als die Anzahl der Nasen, ist es denkbar, dass nicht an jeder Nase eine entsprechende Kontur beziehungsweise Ausnehmung vorgesehen ist.

Sind für einen Anbau der elektromagnetischen Bremse an einem Bauteil gegebenenfalls mehr Verbindungselemente notwendig als für eine Verdrehsicherung der Reibscheibe erforderlich, so können die übrigen Verbindungselemente an anderen, von der Reibscheibe beziehungsweise ihren Nasen unabhängigen, Positionen durch die elektromagnetische Bremse hindurch geführt beziehungsweise an der elektromagnetischen Bremse befestigt werden.

Vorteilhafter Weise ist eine Spuleneinheit vorgesehen, die mit dem Gehäusekörper, vorzugsweise ausschließlich, formschlüssig verbunden ist und/oder die gegenüber dem Gehäusekörper gegen ein Verdrehen gesichert ist.

Die Spuleneinheit weist vorzugsweise eine im Wesentlichen ringförmige Geometrie mit nach außen gerichtet offenem C-förmigen Querschnitt auf. Die Spuleneinheit ist als Spulenträger ausgebildet und geeignet, eine oder mehrere Spulen aufzunehmen beziehungsweise an sich oder in sich zu lagern.

Vorzugsweise greift eine an der Spuleneinheit angeordnete Positioniernase in eine korrespondierende formähnliche, vorzugsweise formgleiche, Aufnahme am Gehäusekörper ein, um die Spuleneinheit gegenüber dem Gehäusekörper gegen ein Verdrehen zu sichern. Es ist jedoch auch denkbar, dass eine entsprechende Aufnahme in der Spuleneinheit und eine hiermit korrespondierende Positioniernase am beziehungsweise im Gehäusekörper angeordnet ist.

Im Gegensatz zum Stand der Technik, nach welchem beispielsweise die Spuleneinheit stoffschlüssig in den Gehäusekörper mittels Kunstharz eingegossen wird, kann also bei der erfindungsgemäßen elektromagnetischen Bremse die Montage derart vereinfacht werden, dass die elektromagnetische Bremse einfacher teilautomatisiert oder vollautomatisiert montiert werden kann. Auch gegenüber einer kraftschlüssigen Verbindung ergeben sich diese Vorteile.

In konstruktiv einfacher Weise ist vorgesehen, dass die Spuleneinheit mittels einer Schnappverbindung formschlüssig mit dem Gehäusekörper verbunden ist, wobei sich vorzugsweise mindestens ein Schnapphaken der Spuleneinheit an einem Steg des Gehäusekörpers abstützt. Der Schnapphaken ist jeweils so dimensioniert und werkstofftechnisch ausgelegt, dass bei der Montage der Spuleneinheit im Gehäusekörper dieser sich unter Aufbringung einer Kraft derart elastisch verformen lässt, dass der Schnapphaken in eine am Gehäusekörper vorgesehene Nut einrasten kann. Die Kraft wirkt hierbei insbesondere parallel zu einer Mittelachse des Gehäusekörpers in Richtung des Bodens des Gehäusekörpers.

Aufgrund ihrer im Wesentlichen ringförmigen Geometrie weist die Spuleneinheit vorzugsweise mindestens drei Schnapphaken auf. Eine andere Anzahl von Schnapphaken ist selbstverständlich auch denkbar, wobei diese vorzugsweise unter Berücksichtigung der auftretenden Kräfte bestimmt wird.

Der beziehungsweise die Schnapphaken können integraler Bestandteil der Spuleneinheit sein. Es ist jedoch auch denkbar, dass die Schnapphaken separate Bauteile und mit der Spuleneinheit verbunden sind.

Es ist außerdem von besonderem Vorteil, dass die Spuleneinheit am Gehäusekörper derart gelagert ist, dass die Spuleneinheit zumindest im Bereich ihrer formschlüssigen Verbindung zum Gehäusekörper nachgiebig und somit relativ zu diesem axial beweglich ist, um eine Montage zu vereinfachen. Die Spuleneinheit kann hierzu an ihrer dem Boden des Gehäusekörpers zugewandten Seite einen Absatz aufweisen, um zumindest außerhalb des Absatzes eine Nachgiebigkeit der Spuleneinheit zu erreichen. Dieser Absatz ist vorzugsweise an einem Durchmesser der im Wesentlichen ringförmigen Spuleneinheit angeordnet, der möglichst weit von dem Durchmesser der Spuleneinheit, an dem die Schnapphaken angeordnet sind, entfernt ist. Außerhalb des Absatzes bleibt beispielsweise im Bereich des inneren Durchmessers, an dem die Schnapphaken angeordnet sind, zwischen der Spuleneinheit und dem Boden des Gehäusekörpers ein Raum frei. Dieser Raum kann als eine Art Federweg genutzt werden, um die Spuleneinheit aufgrund ihrer teilweisen Nachgiebigkeit bei der Montage axial in Richtung des Gehäusekörpers drücken zu können, damit die Schnapphaken leichter in die Nut des Gehäusekörpers einrasten können.

Die Montage der erfindungsgemäßen elektromagnetischen Bremse kommt insgesamt ohne kraftschlüssige oder stoffschlüssige Verbindungstechnik aus. Sie kann ausschließlich über formschlüssige Verbindungen montiert werden. Im Gegensatz zum Stand der Technik ist die Montage einer erfindungsgemäßen elektromagnetischen Bremse somit einfacher durchzuführen. Vor allem kann die Montage in einfacher Weise teilautomatisiert oder vollautomatisiert erfolgen. Hiermit ist eine einfache Montage in einem Fertigungsbetrieb, der im Sinne von Industrie 4.0 ausgelegt ist, insbesondere mithilfe von Robotern möglich.

Die Erfindung richtet sich ferner auf ein Hubwerk, welches eine erfindungsgemäße elektromagnetische Bremse umfasst. Die elektromagnetische Bremse kann bei dieser Anwendung beispielsweise zum Halten einer Last oder zum Abbremsen eines für das Heben und Senken einer Last vorgesehenen Antriebs des Hubwerks verwendet werden. Die Bremsscheibe der elektromagnetischen Bremse ist hierzu mit einem entsprechenden Bauteil des Hubwerks, also einer Antriebswelle des Hubwerk-Antriebs oder Hubwerk-Motors oder mit einer Seiltrommel des Hubwerks, verbunden. Dabei kann die Montage mit direkt am jeweiligen Bauteil aufliegendem Gehäusekörper erfolgen, insbesondere ohne ein Aufliegen der Reibscheibe am Hubwerk-Antrieb oder der Seiltrommel und insbesondere ohne Luftspalt und Dichtung zwischen dem Gehäusekörper und dem Bauteil.

Das Hubwerk kann beispielsweise in einem Kran oder einem stationären Hebezeug verbaut sein, die zumeist dem Heben und Senken von Lasten dienen, im Falle von Kranen insbesondere an voneinander unterschiedlichen Orten durch horizontales Verfahren der angehobenen Lasten innerhalb des Kran-Arbeitsbereichs.

Erfindungsgemäß wird ein Verfahren zur Montage einer elektromagnetischen Bremse nach einer der vorhergehend beschriebenen Ausführungsformen, dadurch geschaffen, dass die Ankerscheibe derart in den Gehäusekörper eingesetzt wird, dass mindestens eine Führungsnase der Ankerscheibe in einer zugehörigen Führungsnut des Gehäusekörpers geführt wird.

In einer vorteilhaften Ausgestaltung ist vorgesehen, dass eine Reibscheibe in eine Aussparung des Gehäusekörpers eingesetzt und durch eine Relativbewegung in Rotationsrichtung mit dem Gehäusekörper mittels einer sich an die Aussparung anschließenden Aufnahmenut in Eingriff gebracht wird, wobei mindestens eine Nase, vorzugsweise drei Nasen, der Reibscheibe und die Aussparung nach der Relativbewegung axial nicht mehr deckungsgleich sind. Mit anderen Worten wird die Reibscheibe mit dem Gehäusekörper formschlüssig, vorzugsweise bajonettartig, verbunden, indem die Nasen der Reibscheibe durch die Aussparungen in die sich daran anschließende(n) Aufnahmenut(en) des Gehäusekörpers und von den Aussparungen weg in die Aufnahmenut(en) hinein geführt werden. Die Reibscheibe wird dabei derart gegenüber dem Gehäusekörper zumindest so weit verdreht, dass zumindest die Kontur der Nase und die entsprechende Negativ-Kontur in der Aussparung axial nicht mehr deckungsgleich sind. Anschließend kann auch die Verdrehsicherung der Reibscheibe wie oben beschrieben hergestellt werden. Vorzugsweise geschieht der Montageschritt der Reibscheibe im Gehäusekörper nachdem der obige Montageschritt der Ankerscheibe erfolgt ist.

Besonders vorteilhaft kann vorgesehen sein, dass eine Spuleneinheit derart in den Gehäusekörper eingesetzt wird, dass mindestens eine Positioniernase der Spuleneinheit zur Verdrehsicherung in eine entsprechende Aufnahme des Gehäusekörpers greift und/oder dass die Spuleneinheit mit dem Gehäusekörper mittels einer Schnappverbindung axial formschlüssig verbunden wird. Es ist jedoch auch denkbar, dass eine entsprechende Aufnahme in der Spuleneinheit und eine hiermit korrespondierende Positioniernase am beziehungsweise im Gehäusekörperangeordnet ist. Vorzugsweise geschieht der Montageschritt der Spuleneinheit im Gehäusekörper bevor die obigen Montageschritte der Ankerscheibe und abschließend der Reibscheibe erfolgen.

Nachfolgend wird die Erfindung anhand von Zeichnungen erläutert. Es zeigen:
Figur 1 eine perspektivische Darstellung eines Krans,
Figur 2 eine schematische Teilschnitt-Darstellung einer Ausführungsform der erfindungsgemäßen elektromagnetischen Bremse,
Figur 3 eine schematische Explosions-Darstellung der erfindungsgemäßen elektromagnetischen Bremse gemäß der Ausführungsform nach Figur 2,
Figur 4a eine schematische perspektivische Darstellung eines Gehäusekörpers gemäß der Ausführungsform nach Figur 2,
Figur 4b eine schematische perspektivische Darstellung einer weiteren Ausführungsform des Gehäusekörpers,
Figur 5 eine schematische perspektivische Darstellung einer Reibscheibe gemäß der Ausführungsform nach Figur 2,
Figur 6 eine schematische perspektivische Darstellung einer Ankerscheibe gemäß der Ausführungsform nach Figur 2,
Figur 7 eine schematische perspektivische Darstellung einer Spuleneinheit gemäß der Ausführungsform nach Figur 2,
Figuren 8a, 8b und 9 schematische Schnitt-Darstellungen der erfindungsgemäßen elektromagnetischen Bremse gemäß der Ausführungsform nach Figur 2,
Figuren 10, 11 und 12 schematische perspektivische Darstellung der erfindungsgemäßen elektromagnetischen Bremse gemäß der Ausführungsform nach Figur 2 in verschiedenen Montagezuständen.

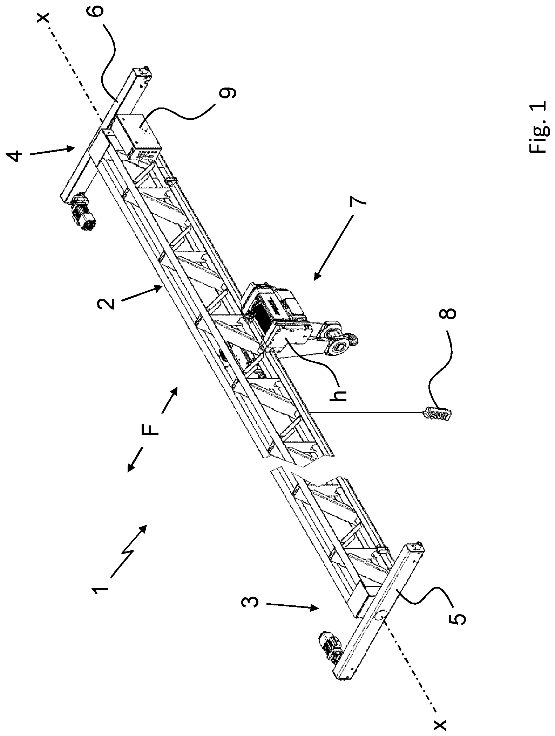

Die Figur 1 zeigt einen beispielhaften Aufbau für einen Kran 1 in einer perspektivischen Darstellung. Erkennbar ist der Kran 1 als Laufkran in Form eines Ein-Träger-Brückenkrans ausgebildet, der einen entlang einer nicht dargestellten Kranbahn verfahrbar gelagerten Kranträger 2 aufweist. Der Kranträger 2 ist in einer im Wesentlichen horizontalen Fahrtrichtung F quer zu seiner Längsrichtung x motorisch, insbesondere elektromotorisch, angetrieben verfahrbar. Hierzu ist an den sich gegenüberliegenden Enden 3, 4 des Kranträgers 2 jeweils ein beispielhaft elektromotorisch angetriebenes Fahrwerk 5, 6 angeordnet, die sich an jeweils einer hier nicht näher ersichtlichen Kranschiene der Kranbahn abstützen. An dem Kranträger 2 ist eine Krankatze 7 mit einem beispielhaft als Seilzug ausgebildeten Hebezeug angeordnet, die sich gemeinsam mit dem Hebezeug und dessen ebenfalls motorisch oder elektromotorisch angetriebenen Hubwerk h parallel zur Längsrichtung x des Kranträgers 2 motorisch, insbesondere elektromotorisch, angetrieben entlang des Kranträgers 2 verfahren lässt. Die Bedienung des Krans 1, das heißt insbesondere das Ansteuern von Bewegungen und Funktionen der Fahrwerke 5, 6, der Krankatze 7 und deren jeweiligem Antrieb sowie des Hubwerks h, erfolgt über einen Steuerschalter 8, der vorliegend als kabelgebundener Hängesteuerschalter ausgebildet ist. Der Steuerschalter 8 ist mit der Steuereinheit 9 kommunikativ verbunden.

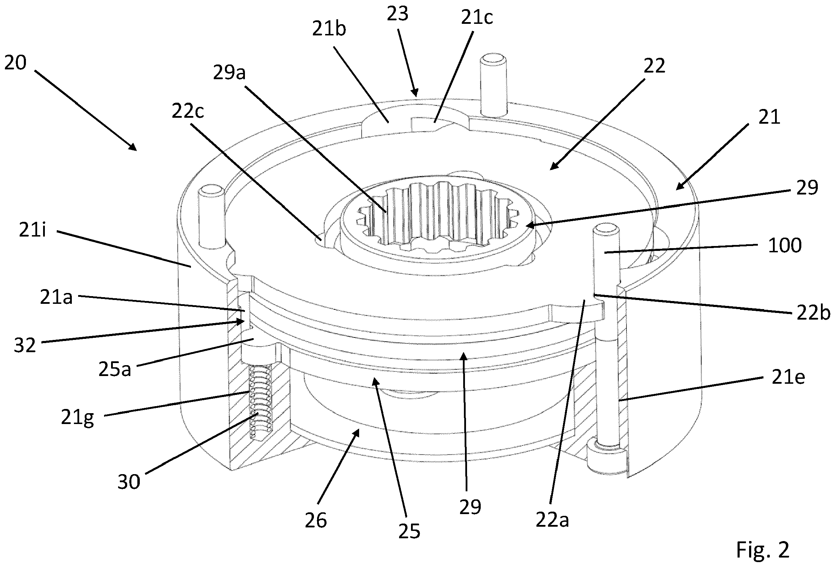

Der Kran 1 dient dem Heben und Senken von Lasten (nicht dargestellt) mittels des Hubwerks h an voneinander unterschiedlichen Orten sowie dem horizontalen Verfahren von Lasten in Fahrtrichtung F mittels der Fahrwerke 5, 6 und/oder in Längsrichtung x mittels der Krankatze 7 innerhalb dessen Arbeitsbereich. Das Hubwerk h umfasst eine erfindungsgemäße elektromagnetische Bremse 20 (siehe beispielsweise Figur 2). Die elektromagnetische Bremse 20 kann bei dieser Anwendung beispielsweise zum Halten einer Last oder zum Abbremsen eines für das Heben und Senken einer Last vorgesehenen Antriebs verwendet werden. Eine Bremsscheibe 29 der elektromagnetischen Bremse 20 ist hierzu mit einer Antriebswelle des Hubwerk-Antriebs oder mit einer Welle einer Seiltrommel des Hubwerks h verbunden.

Ein solches Hubwerk h mit einer erfindungsgemäßen elektromagnetischen Bremse 20 kann jedoch auch an anderen Kran-Typen oder einem anderen, beispielsweise stationären, Hebezeug verbaut sein.

Die Figur 2 zeigt eine schematische Teilschnitt-Darstellung einer Ausführungsform der erfindungsgemäßen elektromagnetischen Bremse 20. Außer einem Gehäusekörper 21 und einer Reibscheibe 22 umfasst die elektromagnetische Bremse 20 eine Spuleneinheit 26, einen innerhalb der Spuleneinheit 26 angeordneten und hiervon erregbaren Polkern 31, mindestens eine Druckfeder 30, eine Ankerscheibe 25 und eine Bremsscheibe 29. Die Reibscheibe 22, die Spuleneinheit 26, der Polkern 31, die Druckfeder 30, die Ankerscheibe 25 und die Bremsscheibe 29 sind in dem dargestellten montierten Zustand in dem Gehäusekörper 21 angeordnet.

Die ringförmig ausgebildete Reibscheibe 22 ist formschlüssig über eine bajonettartige Verbindung 23 mit dem Gehäusekörper 21 verbunden. Hierzu weist die Reibscheibe 22 drei Nasen 22a auf, die in den in dem Gehäusekörper 21 eingebrachten, abschnittsweise umlaufenden, Aufnahmenuten 21c gelagert sind. Hierzu wurden die Nasen 22a deckungsgleich zu den Aussparungen 21b des Gehäusekörpers 21 ausgerichtet, axial in die Aussparungen 21b hinein bewegt und durch eine anschließende Relativbewegung in Rotationsrichtung verdreht und damit in die sich an die Aussparungen 21b anschließenden Aufnahmenuten 21c hinein geführt und beispielsweise die Reibscheibe 22 im Uhrzeigersinn oder der Gehäusekörper 21 entgegen des Uhrzeigersinns verdreht.

Die Reibscheibe 22 ist, insbesondere während des Betriebs der elektromagnetischen Bremse 20, mittels dreier Sicherungselemente 100 gegenüber dem Gehäusekörper 21 gegen ein Verdrehen gesichert. Hierdurch kann verhindert werden, dass die Reibscheibe 22 sich nach ihrer Positionierung, welche im Rahmen der Montage erfolgt, verdreht und dadurch die Nasen 22a derart aus den Aufnahmenuten 21c in Richtung der Aussparungen 21b bewegt werden, dass ein unbeabsichtigtes Lösen der bajonettartigen Verbindung 23 zwischen der Reibscheibe 22 und dem Gehäusekörper 21 möglich ist. Die Sicherungselemente 100 sind Verbindungselemente, die für den Anbau der elektromagnetischen Bremse 20 an einem Bauteil, insbesondere zum Anflanschen an einem Motor oder einer Seiltrommel eines Hubwerks h, verwendet werden. Das beispielhaft dargestellte Sicherungselement 100 ist eine Schraube.

Das Sicherungselement 100 ist jeweils durch eine Durchgangsbohrung 21e in einer Mantelwand 21i des Gehäusekörpers 21 und durch eine Ausnehmung 22b in der zugehörigen Nase 22a der Reibscheibe 22 geführt. Weder in den Durchgangsbohrungen 21e noch in den Ausnehmungen 22b ist ein Gewinde eingebracht, sodass zwischen dem Sicherungselement 100 und der Reibscheibe 22 sowie zwischen dem Sicherungselement 100 und dem Gehäusekörper 21 eine rein formschlüssige Verbindung entsteht.

Die Anzahl der Sicherungselemente 100 und damit der Ausnehmungen 22b in den Nasen 22a der Reibscheibe 22 kann auch kleiner als die Anzahl der Nasen 22a sein. Sind für einen Anbau der elektromagnetischen Bremse 20 an einem Bauteil gegebenenfalls mehr Verbindungselemente notwendig als für die Verdrehsicherung der Reibscheibe 22 erforderlich, so können die übrigen Verbindungselemente an anderen, von der Reibscheibe 22 beziehungsweise ihren Nasen 22a unabhängigen, Positionen durch die elektromagnetische Bremse 20 hindurch geführt beziehungsweise an der elektromagnetischen Bremse 20 befestigt werden.

Die axial verschiebbare Ankerscheibe 25 ist über der Spuleneinheit 26 angeordnet. Die Ankerscheibe 25 weist beispielhaft drei Führungsnasen 25a auf, die zur axialen Führung der Ankerscheibe 25 in den hierfür innenliegend in der Mantelwand 21i des Gehäusekörpers 21 vorgesehenen Führungsnuten 21a dienen. Zwischen der Ankerscheibe 25 und dem Gehäusekörper 21 besteht somit eine Nut-Nase-Verbindung 32.

Die Bremsscheibe 29 ist zwischen der Ankerscheibe 25 und der Reibscheibe 22 angeordnet und rotierbar sowie axial verschiebbar eingerichtet. Die Bremsscheibe 29 weist einen innenliegenden Zahnkranz 29a auf, mittels dessen die Bremsscheibe 29 mit einer durch die elektromagnetische Bremse 20 zu bremsenden Antriebswelle (nicht dargestellt) verbunden werden kann.

Die mindestens eine Druckfeder 30 ist so angeordnet und eingerichtet, dass durch deren Druckkraft die Ankerscheibe 25 zur Bremsscheibe 29 hin axial verschiebbar ist. In der dargestellten Ausführungsform sind sechs Druckfedern 30 gleichmäßig über den Umfang der elektromagnetischen Bremse 20 in der Mantelwand 21i des Gehäusekörpers 21 angeordnet. Es ist allerdings auch denkbar, dass eine hiervon abweichende Anzahl von Druckfedern 30, vorzugsweise gleichmäßig, über den Umfang der elektromagnetischen Bremse 20 verteilt ist. Alternativ kann auch eine einzelne Druckfeder 30 so angeordnet sein, dass diese den Polkern 31 teilweise oder vollständig umschließt.

Die Spuleneinheit 26 und der Polkern 31 sind so angeordnet und eingerichtet, dass durch den mittels der Spuleneinheit 26 elektromagnetisch erregten Polkern 31 eine Zugkraft erzeugbar ist, durch welche die Ankerscheibe 25 entgegen der Federkraft der Druckfeder(n) 30 von der Bremsscheibe 29 weg axial verschiebbar ist.

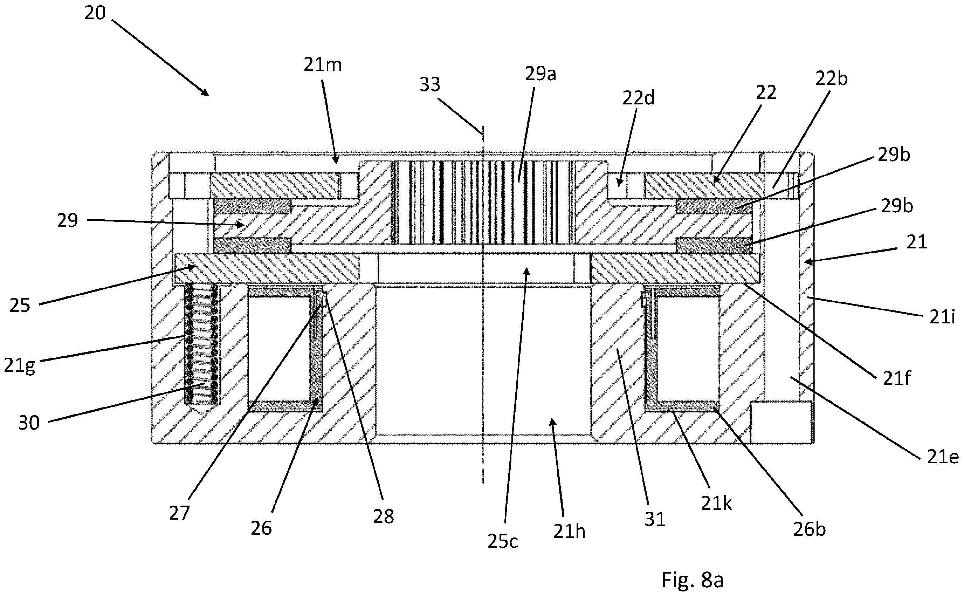

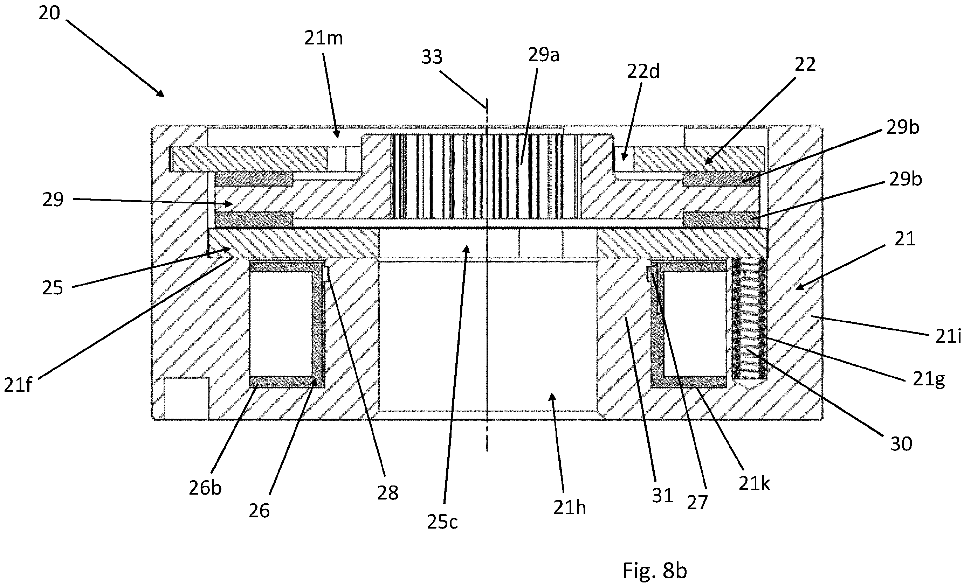

In einem ersten Betriebszustand der elektromagnetischen Bremse 20, dem Bremsen, drückt die Ankerscheibe 25 mittels der Druckkraft der sechs Druckfedern 30 die Bremsscheibe 29 an die Reibscheibe 22, um durch das zwischen der Bremsscheibe 29 und der Reibscheibe 22 und/oder zwischen der Bremsscheibe 29 und der Ankerscheibe 25 entstehende Bremsmoment die Bremsscheibe 29 zu bremsen. Die Bremsscheibe 29 weist im Bereich ihres Außendurchmessers an beiden gegenüberliegenden Seiten einen oder mehrere Bremsbeläge 29b auf (siehe Figuren 8a und 8b). Die Reibscheibe 22 und/oder die Ankerscheibe 25 weist/weisen vorzugsweise an der jeweils zur Bremsscheibe 29 gerichteten Seite eine geeignet strukturierte Oberfläche auf, um beim Bremsen eine optimale Verzögerung der Bremsscheibe 29 sicherzustellen.

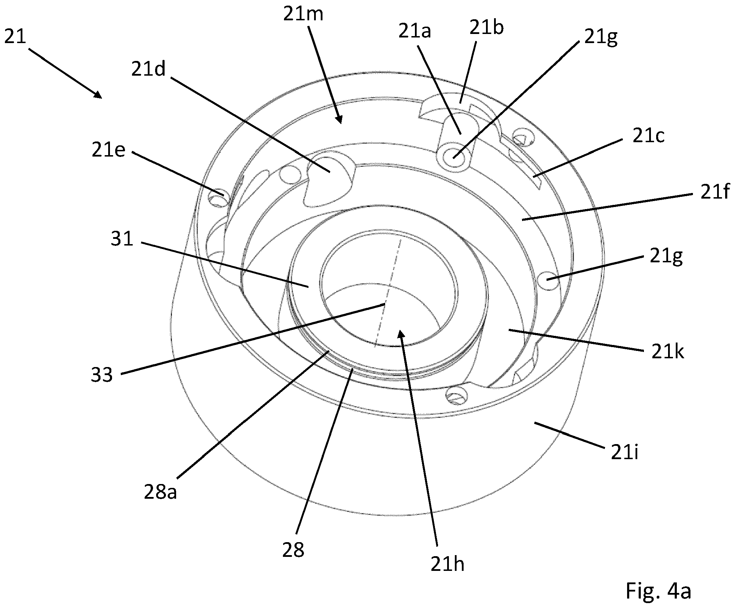

In einem zweiten Betriebszustand der elektromagnetischen Bremse 20, dem Lüften, ist die Ankerscheibe 25 mittels der von der Spuleneinheit 26 und dem Polkern 31 erzeugten Zugkraft, welche größer als die Druckkraft der sechs Druckfedern 30 ist, von der Bremsscheibe 29 so beabstandet angeordnet, dass eine freie und somit ungebremste Rotation der Bremsscheibe 29 ermöglicht wird. Die Ankerscheibe 25 kann in dem zweiten Betriebszustand bei ausreichender Zugkraft auf einem Absatz 21f (siehe beispielsweise Figur 4a) der Mantelwand 21i des Gehäusekörpers 21 aufliegen und sich an diesem abstützen.

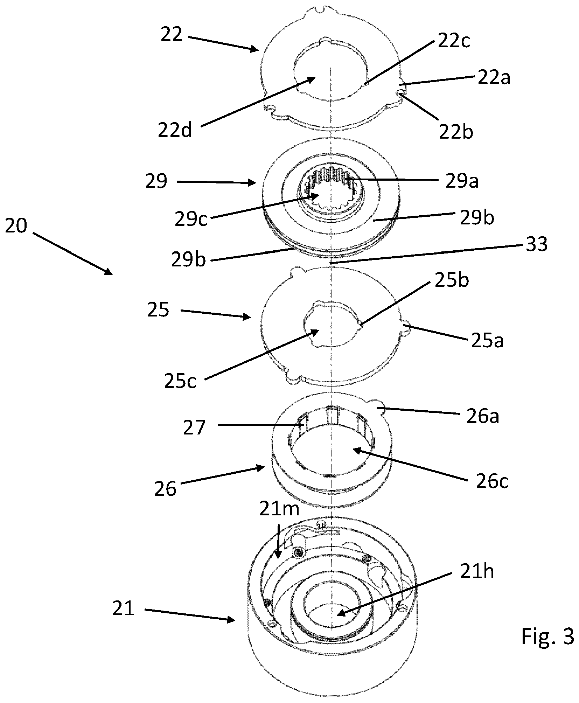

Die Reibscheibe 22 wird während des Bremsens mittels der durch die Druckfeder(n) 30 erzeugten Druckkraft über die Ankerscheibe 25 und die Bremsscheibe 29 an einen äußeren Steg der Aufnahmenut 21c gedrückt. Der äußere Steg der Aufnahmenut 21c begrenzt eine dem Boden 21k des Gehäusekörpers 21 gegenüberliegende erste Öffnung 21m (siehe beispielsweise Figur 3) des Gehäusekörpers 21. Die Reibscheibe 22 wird während des Lüftens mittels des von der Spuleneinheit 26 und dem Polkern 31 erzeugten Magnetfelds beziehungsweise der hieraus resultierenden Zugkraft in Richtung des Bodens 21k an den inneren Steg der Aufnahmenut 21c gezogen.

Trotz einer bei der Montage der elektromagnetischen Bremse 20 erzeugten, rein formschlüssigen, bajonettartigen Verbindung 23 zwischen Gehäusekörper 21 und Reibscheibe 22, wird die Reibscheibe 22 während des Betriebes also durch die dabei wirkenden Kräfte an einen der die Aufnahmenut 21c begrenzenden Stege gezogen oder gedrückt. Somit können Vibrationen an der Reibscheibe 22 und damit eine Geräuschentwicklung während des Betriebes der elektromagnetischen Bremse 20 reduziert oder sogar vermieden werden.

Die Figur 3 zeigt eine schematische Explosions-Darstellung der erfindungsgemäßen elektromagnetischen Bremse 20 gemäß der Ausführungsform nach Figur 2. Gut zu erkennen ist der Aufbau der elektromagnetischen Bremse 20 beziehungsweise die Anordnung der zugehörigen Komponenten Gehäusekörper 21, Spuleneinheit 26, Ankerscheibe 25, Bremsscheibe 29 und Reibscheibe 22 relativ zueinander in axialer Richtung der elektromagnetischen Bremse 20. Die genannten Komponenten werden zur Montage an der Mittelachse 33 ausgerichtet, sodass die Löcher 21h, 22d, 25c, 26c, 29c in allen Komponenten konzentrisch ausgerichtet sind, um beispielsweise eine Antriebswelle montieren zu können. Anschließend werden die genannten Komponenten in Bezug auf die Mittelachse 33 konzentrisch im Gehäusekörper 21 angeordnet, wobei sie in ihrer jeweiligen Ebene derart ausgerichtet werden, dass die jeweilige Nase 22a, Führungsnase 25a, Positioniernase 26a in die entsprechende Aussparung 21b, Führungsnut 21a und/oder Aufnahme 21d des Gehäusekörpers 21 eingesetzt werden kann.

Im Übrigen gelten die Ausführungen zu Figur 2 analog auch für die in Figur 3 gezeigte Darstellung.

Die Figur 4a zeigt eine schematische perspektivische Darstellung des Gehäusekörpers 21 gemäß der Ausführungsform nach Figur 2. Der Gehäusekörper 21 weist eine im Wesentlichen hohlzylindrische und ringförmige Form mit einer kreisförmigen Grundfläche auf. Der Gehäusekörper 21 ist hier einteilig ausgebildet.

Der Gehäusekörper 21 hat eine erste Öffnung 21m an seiner dem Boden 21k gegenüberliegenden Stirnseite. Der Boden 21k hat eine verglichen mit der ersten Öffnung 21m kleinere zweite Öffnung 21h. Durch die zweite Öffnung 21 h kann beispielsweise die vorgenannte zu bremsende Antriebswelle (nicht dargestellt) geführt werden. Der Gehäusekörper 21 weist zudem besondere Formdetails auf, die für die Montage und Funktion der elektromagnetischen Bremse 20 erforderlich sind. Auf diese Formdetails wird in der nachfolgenden Beschreibung eingegangen.

Die erste Öffnung 21m erstreckt sich bis zur Mantelwand 21i und wird von dieser begrenzt. Im Bereich der ersten Öffnung 21m weist der Gehäusekörper 21 in der Mantelwand 21i drei Aussparungen 21b mit sich daran jeweils anschließenden Aufnahmenuten 21c auf. Die Aussparungen 21b sind dabei an einem von der Mantelwand 21i gebildeten und die Aufnahmenuten 21c begrenzenden Steg an der Stirnseite des Gehäusekörpers 21 angeordnet. Die Aufnahmenuten 21c erstrecken sich abschnittsweise umlaufend und voneinander beabstandet in der Mantelwand 21i des Gehäusekörpers 21. Diese Anordnung der sich abschnittsweise erstreckenden Aufnahmenuten 21c hat den Vorteil, dass die endmontierte Position der Reibscheibe 22 im Gehäusekörper 21 in einfacher Weise durch das von der Aussparung 21b abgewandte Ende der Aufnahmenut 21c vorbestimmt werden kann und damit nachfolgende Montageschritte vereinfacht werden können. Die Aussparungen 21b ermöglichen ein Einsetzen der Reibscheibe 22 in die Aufnahmenuten 21c und damit einhergehend das Herstellen der formschlüssigen bajonettartigen Verbindung 23 zwischen Gehäusekörper 21 und Reibscheibe 22.

Die Führungsnuten 21a für die Führung der Ankerscheibe 25 sind so angeordnet, dass die Führungsnasen 25a der Ankerscheibe 25 durch die jeweilige Aussparung 21b in die Führungsnuten 21a eingesetzt werden können. Auf dem Absatz 21f der Mantelwand21i des Gehäusekörpers 21, der den Boden 21k mit der Mantelwand 21i verbindet, kann die Ankerscheibe 25 gelagert werden.

Der Polkern 31 ist ringförmig und in dem Gehäusekörper 21 angeordnet, insbesondere in dessen Wandung eingebettet oder hieraus gebildet. Der die Öffnung 21h im Boden 21k umschließende Polkern 31 ist derart von der Mantelwand 21i beziehungsweise von dem Absatz 21f des Gehäusekörpers 21 beabstandet, dass dazwischen die Spuleneinheit 26 angeordnet werden kann. Der Polkern 31 und der Gehäusekörper 21 teilen sich dieselbe Mittelachse 33. In der dargestellten Ausführungsform ist der Polkern 31 Teil des Gehäusekörpers 21. Da der Polkern 31 aus einem magnetischen Werkstoff gefertigt sein muss, ist in diesem Ausführungsbeispiel der gesamte Gehäusekörper 21 aus einem magnetischen Werkstoff gefertigt. An dem Außendurchmesser des Polkerns 31 ist eine umlaufende Nut 28 angeordnet, in der die Schnapphaken 27 der Spuleneinheit 26 eingreifen und gelagert werden können. Die Schnapphaken 27 stützen sich dann bei Auftreten einer Kraft in Richtung der ersten Öffnung 21m parallel zur Mittelachse 33 an einem die Nut 28 begrenzenden Steg 28a ab.

Der Gehäusekörper 21 weist zudem in seiner Mantelwand 21i beziehungsweise in dem Absatz 21f eine Aufnahme 21d auf, in welche eine Positioniernase 26a der Spuleneinheit 26 eingesetzt wird, um die Spuleneinheit 26 gegenüber dem Gehäusekörper 21 gegen ein Verdrehen zu sichern.

Mehrere Sacklochbohrungen 21g im Absatz 21f dienen zur Aufnahme der Druckfedern 30. Diese sind gleichmäßig auf dem Umfang des Absatzes 21f verteilt. Im vorliegenden Ausführungsbeispiel sind es sechs Sacklochbohrungen 21g, sodass alle sechs Druckfedern 30 verbaut werden können.

Mehrere Durchgangsbohrungen 21e, die sich parallel zur Mittelachse 33 durch die Mantelwand 21i des Gehäusekörpers 21 erstrecken, dienen der Durchführung der Sicherungselemente 100. Die Durchgangsbohrungen 21e erstrecken sich außerdem jeweils durch die Aufnahmenut 21c, die zur Aufnahme der Reibscheibe 22 dienen, hindurch. Die Durchgangsbohrungen 21e weisen kein Gewinde auf.

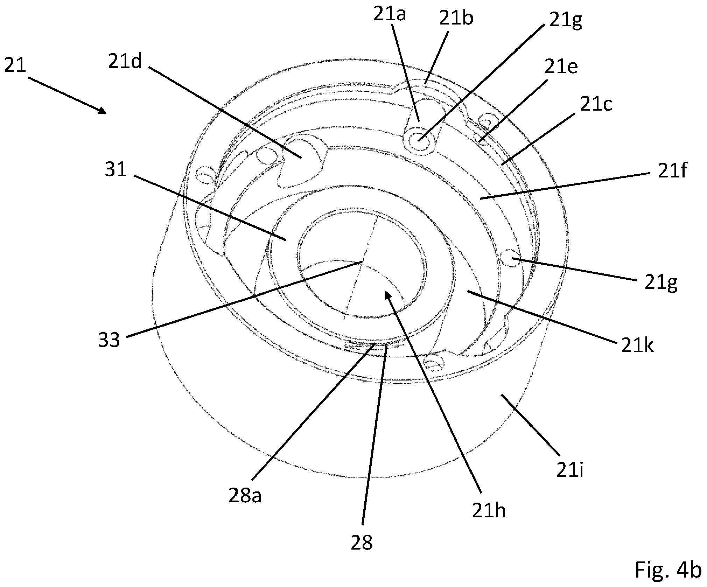

Die Figur 4b zeigt eine schematische perspektivische Darstellung einer weiteren Ausführungsform des Gehäusekörpers 21. Diese Ausführungsform unterscheidet sich von der in der Figur 4a dargestellten Ausführungsform dadurch, dass nur eine einzige Aufnahmenut 21c über den gesamten Umfang umlaufend im Gehäusekörper 21 beziehungsweise dessen Mantelwand 21i eingebracht ist und anstelle einer einzigen umlaufenden Nut 28 beziehungsweise eines umlaufenden Steges 28a für die Abstützung der Schnapphaken 27 mehrere hiervon abschnittsweise umlaufend und voneinander beabstandet eingebracht sind.

Es sind allerdings auch Ausführungsformen denkbar, bei denen nur eine einzige Aufnahmenut 21c und eine einzige Nut 28 und jeweils über den gesamten Umfang umlaufend vorgesehen ist oder sowohl die Aufnahmenuten 21c als auch die Nuten 28 jeweils nur abschnittsweise umlaufend und voneinander beabstandet eingebracht sind. Im Übrigen gelten die Ausführungen zu Figur 4a analog auch für die in Figur 4b gezeigte Darstellung.

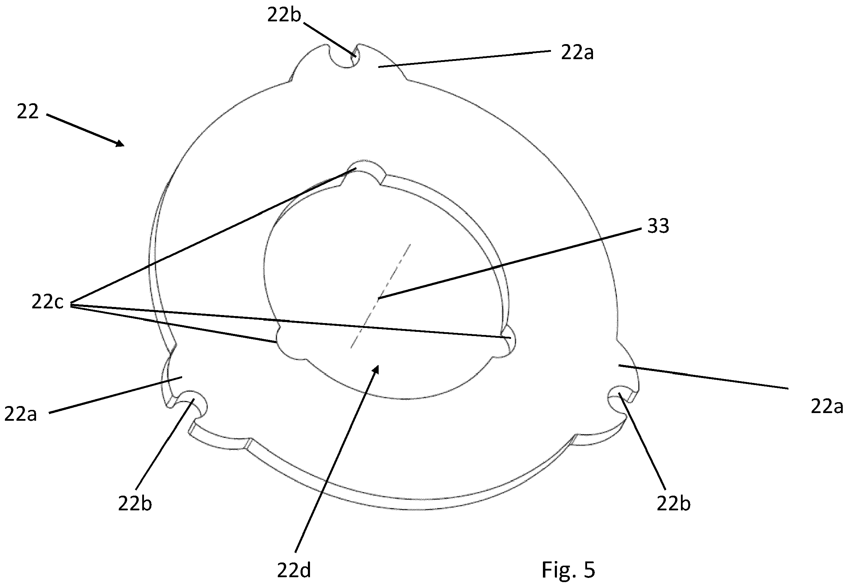

Die Figur 5 zeigt eine schematische perspektivische Darstellung der Reibscheibe 22 gemäß der Ausführungsform nach Figur 2. Die Reibscheibe 22 ist drehsymmetrisch ausgebildet und umfasst drei, in etwa halbkreisförmige, nach außen gerichtete Nasen 22a, die jeweils in einem Winkel von 120° auf dem Umfang der Reibscheibe 22 angeordnet sind. Die Anzahl der Nasen 22a kann variiert werden, sollte allerdings mindestens zwei betragen, damit ein Abheben der Reibscheibe 22 aus dem Gehäusekörper 21 vermieden werden kann. Zudem ist es vorteilhaft, wenn die Nasen 22a gleichmäßig auf dem Umfang der Reibscheibe 22 verteilt sind. In den Nasen 22a ist jeweils eine Ausnehmung 22b angeordnet, durch welche bei einem Anbau der elektromagnetischen Bremse 20 an einem anderen Bauteil die Sicherungselemente 100 gesteckt werden, um so ein Drehen der Reibscheibe 22 um die Mittelachse 33 zu verhindern. Es ist auch denkbar, dass nicht in jeder Nase 22a eine Ausnehmung 22b eingebracht ist.

Die Reibscheibe 22 weist in ihrer Mitte ein Loch auf, das so dimensioniert ist, dass die zu bremsende Antriebswelle (nicht dargestellt) hindurch geführt werden kann. Die Aussparungen 22c am Innendurchmesser der Reibscheibe 22 dienen dem besseren Kraftfluss in der Reibscheibe 22 sowie einem positionsgenauen Greifen der Reibscheibe 22, beispielsweise mittels eines Robotergreifers, und einer präzisen Positionierung der Reibscheibe 22 im Gehäusekörper 21 auch bei engen Toleranzen. Die Oberfläche der Reibscheibe 22 ist zumindest an der Seite, die für einen Bremskontakt mit der Bremsscheibe 29 vorgesehen ist, entsprechend für eine optimale Verzögerung ausgelegt.

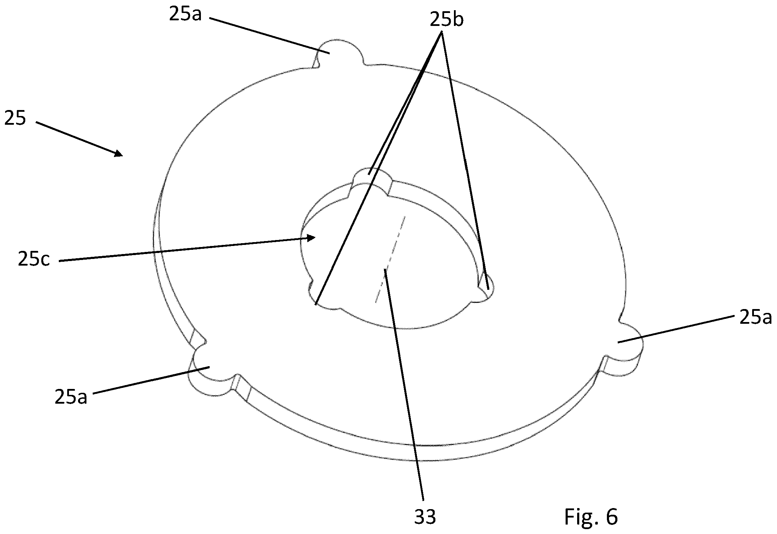

Die Figur 6 zeigt eine schematische perspektivische Darstellung der Ankerscheibe 25 gemäß der Ausführungsform nach Figur 2. Die Ankerscheibe 25 ist drehsymmetrisch ausgebildet und umfasst drei, in etwa halbkreisförmige, nach außen gerichtete Führungsnasen 25a, die jeweils in einem Winkel von 120° auf dem Umfang der Ankerscheibe 25 angeordnet sind. Durch die drei Führungsnasen 25a kann eine Führung der Ankerscheibe 25 ohne ein Verkanten im Gehäusekörper 21 ermöglicht werden.

Die Ankerscheibe 25 weist in ihrer Mitte ein Loch 25c auf, das so dimensioniert ist, dass die zu bremsende Antriebswelle (nicht dargestellt) hindurch geführt werden kann. Die Aussparungen 25b am Innendurchmesser der Ankerscheibe 25 dienen dem besseren Kraftfluss in der Ankerscheibe 25 sowie einem positionsgenauen Greifen der Ankerscheibe 25, beispielsweise mittels eines Robotergreifers, und einer präzisen Positionierung der Ankerscheibe 25 im Gehäusekörper 21 auch bei engen Toleranzen. Die Oberfläche der Ankerscheibe 25 ist zumindest an der Seite, die zur Bremsscheibe 29 gerichtet ist, entsprechend für eine optimale Verzögerung ausgelegt.

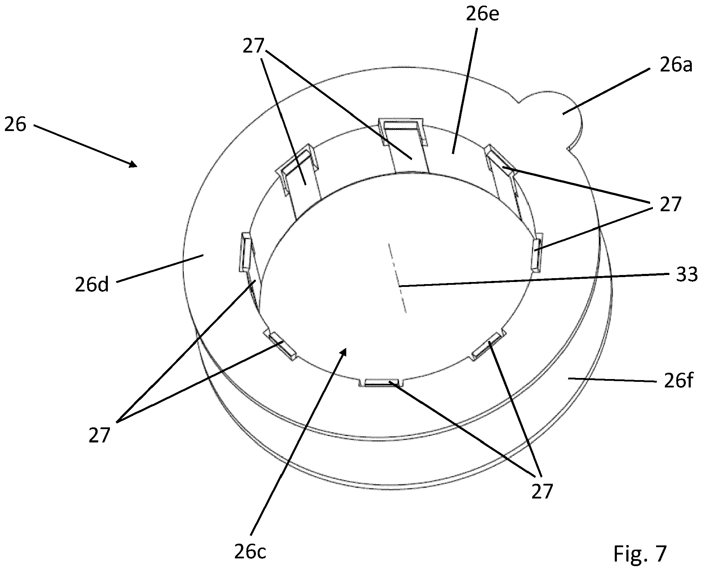

Die Figur 7 zeigt eine schematische perspektivische Darstellung der Spuleneinheit 26 gemäß der Ausführungsform nach Figur 2. Die Spuleneinheit 26 weist eine im Wesentlichen ringförmige Geometrie mit nach außen gerichtet offenem C-förmigen Querschnitt auf. Der C-förmige Querschnitt wird von einem sich im Wesentlichen horizontal erstreckenden oberen Schenkel 26d, einem sich im Wesentlichen horizontal erstreckenden unteren Schenkel 26f und einem die beiden Schenkel 26d, 26f verbindenden und sich im Wesentlichen rechtwinklig zu den Schenkeln 26d, 26f erstreckenden Steg 26e gebildet.

Die Spuleneinheit 26 weist in dieser Ausführungsform acht Schnapphaken 27 auf. Die Anzahl der Schnapphaken 27 kann jedoch unter Berücksichtigung der in beide axialen Richtungen auftretenden Kräfte variiert werden. Jeder Schnapphaken 27 ist so dimensioniert und werkstofftechnisch ausgelegt, dass dieser sich bei der Montage der Spuleneinheit 26 im Gehäusekörper 21 unter Aufbringung einer Kraft, welche parallel zur Mittelachse 33 in Richtung des Bodens 21k des Gehäusekörpers 21 wirkt, nach außen derart elastisch verformen lässt, dass der Schnapphaken 27 in die Nut 28 einrasten kann. Die Schnapphaken 27 sind integraler Bestandteil der Spuleneinheit 26. Es ist jedoch auch denkbar, dass die Schnapphaken 27 separate Bauteile und mit der Spuleneinheit 26 verbunden sind.

Die Spuleneinheit 26 weist außerdem eine, in etwa halbkreisförmige, Positioniernase 26a auf, die zur Verdrehsicherung im Gehäusekörper 21 dient. Zudem kann die Positioniernase 26a in Gehäusekörpern 21, bei denen abschnittweise mehrere Nuten 28 vorhanden sind, dazu dienen, dass bei der Montage der Spuleneinheit 26 jeweils ein Schnapphaken 27 deckungsgleich mit einer der Nuten 28 positioniert wird.

Die Spuleneinheit 26 ist als Spulenträger ausgebildet und geeignet, eine oder mehrere zur Erzeugung eines magnetischen Feldes notwendige Spulen (nicht dargestellt) aufzunehmen. Die Spulen werden dabei in der nach außen offenen, C-förmigen Struktur der Spuleneinheit 26 angeordnet beziehungsweise gelagert.

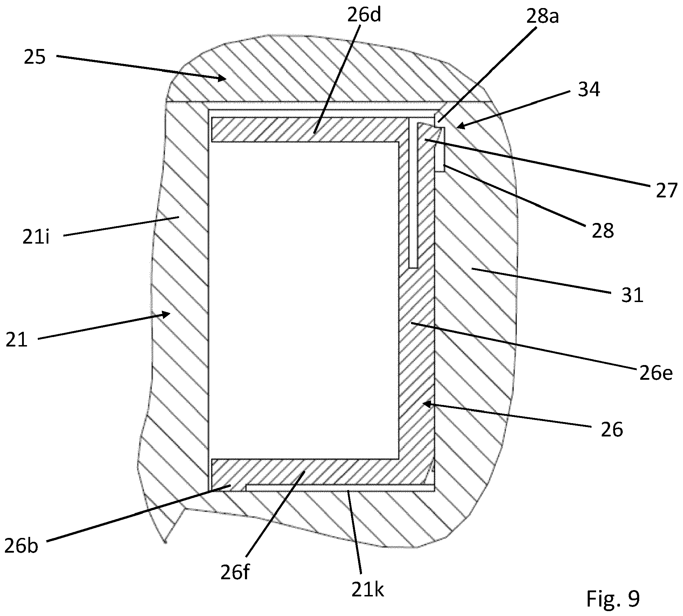

Die Figuren 8a, 8b und 9 zeigen schematische Schnitt-Darstellungen der erfindungsgemäßen elektromagnetischen Bremse 20 gemäß der Ausführungsform nach Figur 2. In den Figuren 8a und 8b lässt sich der Aufbau der montierten elektromagnetischen Bremse 20 gut erkennen.

Der Gehäusekörper 21 weist zwischen seiner Mantelwand 21i und dem Polkern 31 eine entsprechend der Abmessungen der Spuleneinheit 26 dimensionierte Ausnehmung auf. Die Ausnehmung ist derart gestaltet, dass bei der Montage der Spuleneinheit 26 ein hierfür benötigtes Spiel existiert und trotzdem eine ausreichende Fixierung der Spuleneinheit 26, insbesondere während des Betriebes der elektromagnetischen Bremse 20, gewährleistet wird. Die Schnapphaken 27 der Spuleneinheit 26 sind in der Nut 28 gelagert und stützen sich an dem Steg 28a des Gehäusekörpers 21 ab (siehe Figur 9). Die Spuleneinheit 26 ist also ausschließlich formschlüssig mit dem Gehäusekörper 21 verbunden.

Die Ankerscheibe 25 ist zwischen der ersten Öffnung 21m des Gehäusekörpers 21 und der Spuleneinheit 26 angeordnet. Damit die Ankerscheibe 25 auf dem Absatz 21f aufliegen kann, ist der zur ersten Öffnung 21m des Gehäusekörpers 21 gerichtete obere Schenkel 26d der Spuleneinheit 26 entsprechend von dem Absatz 21f beabstandet. Mittels des von der Spuleneinheit 26 erregten Polkerns 31 ist die Zugkraft erzeugbar, durch welche die Ankerscheibe 25 zum Lösen der Bremse 20 von der Bremsscheibe 29 weg axial verschiebbar ist.

Die sechs Druckfedern 30 sind jeweils in den Sacklochbohrungen 21g angeordnet. In den Figuren 8a und 8b ist hiervon jeweils nur eine Sacklochbohrung 21g und eine Druckfeder 30 dargestellt. Die Druckfedern 30 sind eingerichtet, durch ihre Druckkraft zum Bremsen die Ankerscheibe 25 zur Bremsscheibe 29 hin axial zu verschieben.

Die Reibscheibe 22 ist zwischen der Stirnseite des Gehäusekörpers 21 und der Bremsscheibe 29 angeordnet. Die zwischen der axial verschiebbaren Ankerscheibe 25 und der Reibscheibe 22 angeordnete Bremsscheibe 29 ist um die Mittelachse 33 rotierbar sowie axial verschiebbar eingerichtet. Die Bremsscheibe 29 weist im Bereich ihres Außendurchmessers an beiden gegenüberliegenden Seiten einen oder mehrere Bremsbeläge 29b auf. Hierdurch kann, insbesondere in Kombination mit den vorgenannten Oberflächen an der Reibscheibe 22 und/oder der Ankerscheibe 25, ein optimales Bremsen erreicht werden.

In der Figur 9 ist der Bereich aus den Figuren 8a und 8b vergrößert dargestellt, aus dem sich die Einbausituation der Spuleneinheit 26 im Gehäusekörper 21 sowie der von den Schenkeln 26d, 26f und dem Steg 26e gebildete C-förmige Querschnitt gut erkennen lässt, der nach außen zur Mantelwand 21i hin offen ist.

Der dargestellte Schnapphaken 27 ist ebenso wie die übrigen Schnapphaken 27 ein integraler Bestandteil der Spuleneinheit 26, greift in die Nut 28 ein und stützt die Spuleneinheit 26 an dem Steg 28a an dem Gehäusekörper 21 ab. Die Spuleneinheit 26 ist somit mittels einer Schnappverbindung 34 formschlüssig mit dem Gehäusekörper 21 verbunden.

Zur Herstellung der Schnappverbindung 34 wird der Schnapphaken 27 in Richtung der Mantelwand 21i des Gehäusekörpers 21 elastisch verformt. Mit anderen Worten werden die Schnapphaken 27 bei der Montage der Spuleneinheit 26 radial nach außen zurückgebogen, um dann radial nach innen in die Nut 28 des Gehäusekörpers 21 einzurasten. Die Spuleneinheit 26 weist hierzu im Bereich der Schnapphaken 27 eine längs des Stegs 26e verlaufende schlitzförmige Ausnehmung auf. Die elastische Verformung erfolgt aufgrund einer Kraft, welche insbesondere parallel zur Mittelachse 33 in Richtung des Bodens 21k des Gehäusekörpers 21 wirkt.

Die Spuleneinheit 26 ist auf einem Absatz 26b am Boden 21k des Gehäusekörpers 21 gelagert. Durch den Absatz 26b entsteht im Bereich des Durchmessers, an dem die Schnapphaken 27 angeordnet sind, zwischen Spuleneinheit 26 und Gehäusekörper 21 ein Raum. Die Spuleneinheit 26 ist hierdurch im Bereich der Schnappverbindung 34 relativ zum Gehäusekörper 21 axial beweglich, um eine Montage zu vereinfachen. Der Raum kann also als eine Art Federweg genutzt werden, den dem Boden 21k zugewandten Schenkel 26f der Spuleneinheit 26 bei ihrer Montage außerhalb des Absatzes 26b um den als Drehpunkt dienenden Absatz 26b in Richtung des Bodens 21k des Gehäusekörpers 21 zu drücken und damit in diese Richtung zu biegen, damit die Schnapphaken 27 leichter in die Nut 28 des Gehäusekörpers 21 einrasten können. Mit anderen Worten ist die Spuleneinheit 26 nachgiebig beziehungsweise federnd eingerichtet, damit auch bei Fertigungsungenauigkeiten ein Einrasten der Schnapphaken 27 sichergestellt wird.

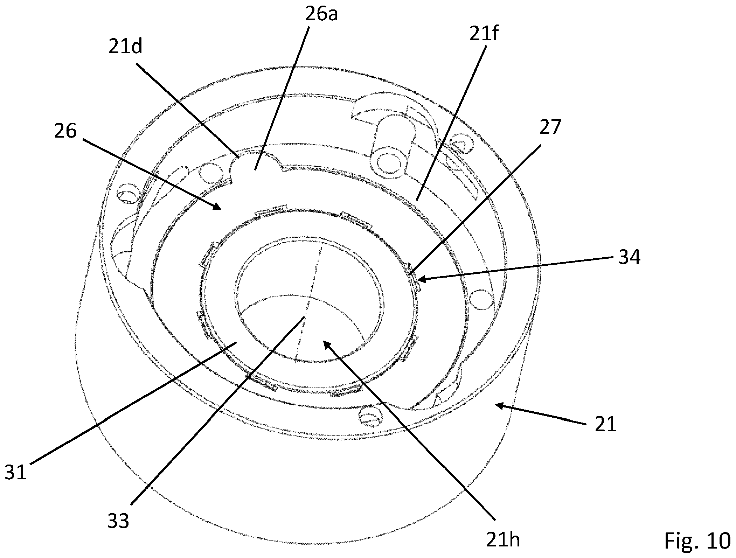

Die Figuren 10, 11 und 12 zeigen schematische perspektivische Darstellungen der erfindungsgemäßen elektromagnetischen Bremse 20 gemäß der Ausführungsform nach Figur 2 in verschiedenen Montagezuständen.

In der Figur 10 ist lediglich die Spuleneinheit 26 in dem Gehäusekörper 21 verbaut dargestellt. Zur Verdrehsicherung der Spuleneinheit 26 greift die daran angeordnete Positioniernase 26a in die korrespondierende Aufnahme 21d am Gehäusekörper 21 ein. Zwischen der Spuleneinheit 26 und dem Gehäusekörper entsteht somit eine rein formschlüssige Schnappverbindung 34.

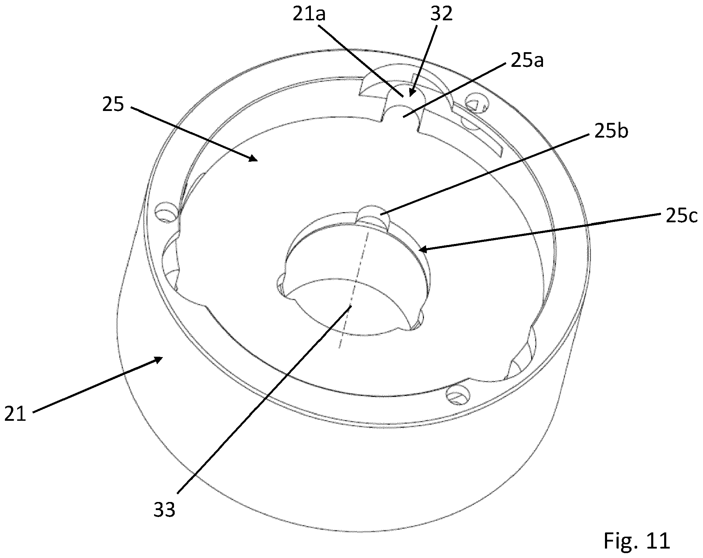

In der Figur 11 ist zusätzlich die Ankerscheibe 25 in dem Gehäusekörper 21 verbaut dargestellt. Die Ankerscheibe 25 wird derart in den Gehäusekörper 21 eingesetzt, dass jede Führungsnase 25a der Ankerscheibe 25 in einer zugehörigen Führungsnut 21a des Gehäusekörpers 21 geführt wird. Die Ankerscheibe 25 wird über die so gebildete Nut-Nase-Verbindung 32 im Gehäusekörper 21 axial geführt. Die Außenkontur der Führungsnasen 25a ist vorzugsweise korrespondierend zu der Innenkontur der Führungsnuten 21a ausgebildet. Zwischen der Außenkontur der Führungsnasen 25a und der Innenkontur der Führungsnuten 21a ist allerdings ausreichend Spiel für eine axiale Bewegung der Ankerscheibe 25 vorgesehen.

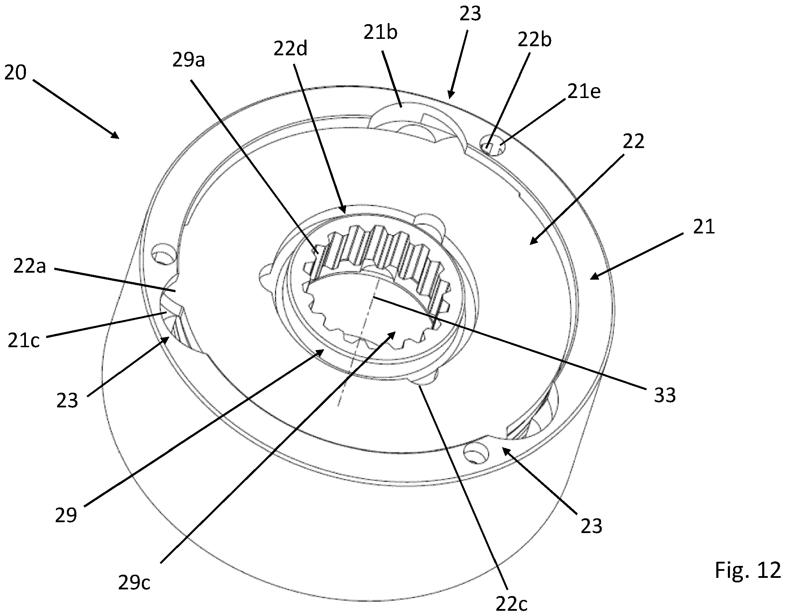

In der Figur 12 sind zusätzlich die Bremsscheibe 29 und die Reibscheibe 22 in dem Gehäusekörper 21 verbaut dargestellt. Die Reibscheibe 22 ist formschlüssig und hierzu bajonettartig mit dem Gehäusekörper 21 verbunden. Für die bajonettartige Verbindung 23 werden die Nasen 22a der Reibscheibe 22 durch die Aussparungen 21b in die Aufnahmenuten 21c des Gehäusekörpers 21 geführt und in diesen in Rotationsrichtung verschoben. Die Reibscheibe 22 und der Gehäusekörper 21 werden also relativ zueinander um die Mittelachse 33 verdreht. Die drei Nasen 22a der Reibscheibe 22 und die Aussparung 21b sind nach dieser Relativbewegung axial, das heißt im Wesentlichen parallel zur Mittelachse 33, nicht mehr deckungsgleich.

Durch die Durchgangsbohrungen 21e und die entsprechend positionierten Ausnehmungen 22b an den Nasen 22a der Reibscheibe 22 können dann beim Anbau der elektromagnetischen Bremse 20 an ein anderes Bauteil die drei Verbindungselemente geführt werden, die in diesem Fall gleichzeitig alle auch als Sicherungselemente 100 dienen.

### Bezugszeichenliste

- 1: Kran
- 2: Kranträger
- 3: Ende
- 4: Ende
- 5: Fahrwerk
- 6: Fahrwerk
- 7: Krankatze
- 8: Steuerschalter
- 9: Steuereinheit
- 20: Elektromagnetische Bremse
- 21: Gehäusekörper
- 21a: Führungsnut
- 21b: Aussparung
- 21c: Aufnahmenut
- 21d: Aufnahme
- 21e: Durchgangsbohrung
- 21f: Absatz
- 21g: Sacklochbohrung
- 21h: zweite Öffnung
- 21i: Mantelwand
- 21k: Boden
- 21m: erste Öffnung
- 22: Reibscheibe
- 22a: Nase
- 22b: Ausnehmung
- 22c: Aussparung
- 22d: Loch
- 23: Bajonettartige Verbindung
- 25: Ankerscheibe
- 25a: Führungsnase
- 25b: Aussparung
- 25c: Loch
- 26: Spuleneinheit
- 26a: Positioniernase
- 26b: Absatz
- 26c: Loch
- 26d: oberer Schenkel
- 26e: Steg
- 26f: unterer Schenkel
- 27: Schnapphaken
- 28: Nut
- 28a: Steg
- 29: Bremsscheibe
- 29a: Zahnkranz
- 29b: Bremsbelag
- 29c: Loch
- 30: Druckfeder
- 31: Polkern
- 32: Nut-Nase-Verbindung
- 33: Mittelachse
- 34: Schnappverbindung
- 100: Sicherungselement
- h: Hubwerk
- F: Fahrtrichtung
- x: Längsrichtung

## Patentansprüche

1. Elektromagnetische Bremse (20) mit einem Gehäusekörper (21) und einer Ankerscheibe (25), wobei der Gehäusekörper (21) einen Polkern (31) umfasst, **dadurch gekennzeichnet, dass** die Ankerscheibe (25) über eine Nut-Nase-Verbindung (32) im Gehäusekörper (21) axial geführt ist, wobei mindestens eine Führungsnut (21a), vorzugsweise drei Führungsnuten (21a), und mindestens eine zugehörige Führungsnase (25a), vorzugsweise drei zugehörige Führungsnasen (25a), vorgesehen sind, wobei die jeweilige Führungsnut (21a) vorzugsweise im Gehäusekörper (21) angeordnet ist.

2. Elektromagnetische Bremse (20) nach Anspruch 1, **dadurch gekennzeichnet, dass** eine Reibscheibe (22) vorgesehen ist, die formschlüssig, vorzugsweise nach Art eines Bajonettverschlusses (23), mit dem Gehäusekörper (21) verbunden ist und/oder gegenüber dem Gehäusekörper (21) gegen ein Verdrehen gesichert ist.

3. Elektromagnetische Bremse (20) nach Anspruch 2, **dadurch gekennzeichnet, dass** die Reibscheibe (22) mittels mindestens eines Sicherungselements (100) gegenüber dem Gehäusekörper (21) gegen ein Verdrehen gesichert ist und das Sicherungselement (100) ein Verbindungselement ist, welches für den Anbau der elektromagnetischen Bremse (20) an einem Bauteil verwendet wird.

4. Elektromagnetische Bremse (20) nach einem der vorhergehenden Ansprüche, **dadurch gekennzeichnet, dass** eine Spuleneinheit (26) vorgesehen ist, die mit dem Gehäusekörper (21) formschlüssig verbunden ist und/oder die gegenüber dem Gehäusekörper (21) gegen ein Verdrehen gesichert ist.

5. Elektromagnetische Bremse (20) nach Anspruch 4, **dadurch gekennzeichnet, dass** die Spuleneinheit (26) mittels einer Schnappverbindung (34) formschlüssig mit dem Gehäusekörper (21) verbunden ist, wobei sich vorzugsweise mindestens ein Schnapphaken (27) der Spuleneinheit (26) an einem Steg (28a) des Gehäusekörpers (21) abstützt.

6. Elektromagnetische Bremse (20) nach Anspruch 4 oder 5, **dadurch gekennzeichnet, dass** die Spuleneinheit (26) am Gehäusekörper (21) derart gelagert ist, dass die Spuleneinheit (26) im Bereich der formschlüssigen Verbindung zum Gehäusekörper (21) relativ zu diesem axial beweglich ist, um eine Montage zu vereinfachen.

7. Hubwerk (h) mit einer elektromagnetischen Bremse (20) nach einem der vorhergehenden Ansprüche.

8. Verfahren zur Montage einer elektromagnetischen Bremse (20) nach einem der Ansprüche 1 bis 6, **dadurch gekennzeichnet, dass** die Ankerscheibe (25) derart in den Gehäusekörper (21) mit einem Polkern (31) eingesetzt wird, dass mindestens eine Führungsnase (25a) der Ankerscheibe (25) in einer zugehörigen Führungsnut (21a) des Gehäusekörpers (21) geführt wird.

9. Verfahren zur Montage einer elektromagnetischen Bremse (20) nach Anspruch 8, **dadurch gekennzeichnet, dass** eine Reibscheibe (22) in eine Aussparung (21b) des Gehäusekörpers (21) eingesetzt und durch eine Relativbewegung in Rotationsrichtung mit dem Gehäusekörper (21) mittels einer sich an die Aussparung (21b) anschließenden Aufnahmenut (21c) in Eingriff gebracht wird, wobei mindestens eine Nase (22a), vorzugsweise drei Nasen (22a), der Reibscheibe (22) und die Aussparung (21b) nach der Relativbewegung axial nicht mehr deckungsgleich sind.

10. Verfahren zur Montage einer elektromagnetischen Bremse (20) nach Anspruch 8 oder 9, **dadurch gekennzeichnet, dass** eine Spuleneinheit (26) derart in den Gehäusekörper (21) eingesetzt wird, dass mindestens eine Positioniernase (26a) der Spuleneinheit (26) zur Verdrehsicherung in eine entsprechende Aufnahme (21d) des Gehäusekörpers (21) greift und/oder dass die Spuleneinheit (26) mit dem Gehäusekörper (21) mittels einer Schnappverbindung (34) axial formschlüssig verbunden wird.

## Claims

1. Electromagnetic brake (20) with a housing body (21) and an armature disk (25), wherein the housing body (21) comprises a pole core (31), **characterized in that** the armature disk (25) is guided axially via a groove-lug connection (32) in the housing body (21), wherein at least one guide groove (21a), preferably three guide grooves (21a), and at least one associated guide lug (25a), preferably three associated guide lugs (25a), are provided, wherein the respective guide groove (21a) is preferably arranged in the housing body (21).

2. Electromagnetic brake (20) according to claim 1, **characterized in that** a friction disk (22) is provided which is positively connected to the housing body (21), preferably in the manner of a bayonet lock (23), and/or is secured against rotation relative to the housing body (21).

3. Electromagnetic brake (20) according to claim 2, **characterized in that** the friction disk (22) is secured against rotation relative to the housing body (21) by means of at least one locking element (100) and the locking element (100) is a connecting element which is used for attaching the electromagnetic brake (20) to a component.

4. Electromagnetic brake (20) according to any one of the preceding claims, **characterized in that** a coil unit (26) is provided which is positively connected to the housing body (21) and/or is secured against rotation relative to the housing body (21).

5. Electromagnetic brake (20) according to claim 4, **characterized in that** the coil unit (26) is positively connected to the housing body (21) by means of a snap connection (34), wherein preferably at least one snap hook (27) of the coil unit (26) is supported on a web (28a) of the housing body (21).

6. Electromagnetic brake according to claim 4 or 5, **characterized in that** the coil unit (26) is mounted on the housing body (21) in such a way that the coil unit (26) in the region of the positive connection to the housing body (21) is axially movable relative thereto in order to simplify assembly.

7. Lifting gear (h) having an electromagnetic brake (20) according to any one of the preceding claims.

8. Method for assembling an electromagnetic brake (20) according to any one of claims 1 to 6, **characterized in that** the armature disk (25) is inserted into the housing body (21) with a pole core (31) in such a way that at least one guide lug (25a) of the armature disk (25) is guided in an associated guide groove (21a) of the housing body (21).

9. Method for assembling an electromagnetic brake (20) according to claim 8, **characterized in that** a friction disk (22) is inserted into a recess (21b) of the housing body (21) and is brought into engagement with the housing body (21) by means of a receiving groove (21c) adjoined to the recess (21b) by a relative movement in the direction of rotation, wherein at least one lug (22a), preferably three lugs (22a), of the friction disk (22) and the recess (21b) are no longer axially congruent after the relative movement.

10. Method for assembling the electromagnetic brake (20) according to claim 8 or 9, **characterized in that** a coil unit (26) is inserted into the housing body (20) in such a way that at least one positioning lug (26a) of the coil unit (26) engages in a corresponding receptacle (21d) of the housing body (21) to protect against rotation and/or **in that** the coil unit is connected in an axially positive manner to the housing body (21) by means of a snap connection (34).

## Revendications

1. Frein électromagnétique (20) comprenant un corps de boîtier (21) et un disque d'induit (25), le corps de boîtier (21) comprenant un noyau polaire (31), **caractérisé en ce que** le disque d'induit (25) est guidé axialement dans le corps de boîtier (21) par une liaison à rainure et languette (32), au moins une rainure de guidage (21a), de préférence trois rainures de guidage (21a), et au moins une languette de guidage associée (25a), de préférence trois languettes de guidage associées (25a), étant prévues, la rainure de guidage respective (21a) étant de préférence disposée dans le corps de boîtier (21).

2. Frein électromagnétique (20) selon la revendication 1, **caractérisé en ce qu'**un disque de friction (22) est prévu qui est relié par complémentarité de formes, de préférence à la manière d'une fermeture à baïonnette (23), au corps de boîtier (21) et/ou est bloqué en rotation par rapport au corps de boîtier (21).

3. Frein électromagnétique (20) selon la revendication 2, **caractérisé en ce que** le disque de friction (22) est bloqué en rotation par rapport au corps de boîtier (21) au moyen d'au moins un élément de blocage (100) et l'élément de blocage (100) est un élément de liaison qui est utilisé pour monter le frein électromagnétique (20) sur un composant.

4. Frein électromagnétique (20) selon l'une des revendications précédentes, **caractérisé en ce qu'**une unité formant bobine (26) est prévue qui est reliée par complémentarité de formes au corps de boîtier (21) et/ou qui est bloquée en rotation par rapport au corps de boîtier. (21).

5. Frein électromagnétique (20) selon la revendication 4, **caractérisé en ce que** l'unité formant bobine (26) est reliée par complémentarité de forme au corps de boîtier (21) au moyen d'une liaison par encliquetage (34), de préférence au moins un crochet d'encliquetage (27) de l'unité formant bobine (26) prenant appui sur une nervure (28a) du corps de boîtier (21).

6. Frein électromagnétique (20) selon la revendication 4 ou 5, **caractérisé en ce que** l'unité formant bobine (26) est montée sur le corps de boîtier (21) de manière à ce que l'unité formant bobine (26) est mobile axialement par rapport au corps de boîtier (21) au niveau de la liaison par complémentarité de formes à ce dernier afin de simplifier le montage.

7. Treuil (h) à frein électromagnétique (20) selon l'une des revendications précédentes.

8. Procédé de montage d'un frein électromagnétique (20) selon l'une des revendications 1 à 6, **caractérisé en ce que** le disque d'induit (25) est inséré dans le corps de boîtier (21) pourvu d'un noyau polaire (31) de manière à ce qu'au moins une languette de guidage (25a) du disque d'induit (25) soit guidée dans une rainure de guidage associée (21a) du corps de boîtier (21).

9. Procédé de montage d'un frein électromagnétique (20) selon la revendication 8, **caractérisé en ce qu'**un disque de friction (22) est inséré dans un évidement (21b) du corps de boîtier (21) et est amené en engagement, par un mouvement relatif dans le sens de rotation, avec le corps de boîtier (21) au moyen d'une rainure de réception (21c) attenante à l'évidement (21b), au moins un ergot (22a), de préférence trois ergots (22a), du disque de friction (22) et l'évidement (21b) n'étant plus congruents axialement après le mouvement relatif.

10. Procédé de montage d'un frein électromagnétique (20) selon la revendication 8 ou 9, **caractérisé en ce qu'**une unité formant bobine (26) est inséré dans le corps de boîtier (21) de manière à ce qu'au moins une patte de positionnement (26a) de l'unité formant bobine (26) s'engage dans un logement correspondant (21d) du corps de boîtier (21) afin d'empêcher la rotation et/ou en que l'unité formant bobine (26) est reliée axialement par complémentarité de formes au corps de boîtier (21) au moyen d'une liaison par encliquetage (34).
